(19) Europäisches Patentamt

European Patent Office

Office européen des brevets

(11) **EP 1 255 387 A1**

(12) **EUROPEAN PATENT APPLICATION**

(43) Date of publication:
**06.11.2002 Bulletin 2002/45**

(51) Int Cl.7: **H04L 25/02**

(21) Application number: **01830291.9**

(22) Date of filing: **04.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Siemens Information and Communication Networks S.p.A.**
**20126 Milano (IT)**

(72) Inventors:
• **Del Bello, Vincenzo**
**23100 Sondrio (IT)**

• **Nicoli, Monica Barbara**
**24052 Azzano San Paolo (BG) (IT)**
• **Spagnolini, Umberto**
**20046 Biassono (MI) (IT)**

(74) Representative: **Giustini, Delio**
**Siemens Information and Communication Networks S.p.A.,**
**Palazzo Gorky**
**Via Monfalcone, 1**
**20092 Cinisello Balsamo (IT)**

(54) **Estimation of a plurality of channels in a diversity receiver**

(57) In a base station, with an antenna array, the impulse responses multiple channels are estimated, by means of a reduced-complexity algorithm.

Fig.7

Printed by Jouve, 75001 PARIS (FR)

Description

## FIELD OF THE INVENTION

The present invention is referred to the field of radiomobile systems and more precisely to a variable complexity space-time channel estimation and receiver for mobile communication systems.

## BACKGROUND ART

Main problem of digital receivers is that to correctly detect the transmitted sequences of data, that because some electromagnetic phenomena having casual nature distort the waveforms of the transmitted signal making them not more immediately recognizable to the receiver. Noise always present on the channel and interferences worsen the received signal furthermore. So the receiver shall eliminate from the received signal the effect of noise and interferences to achieve a correct data detection. In the field of the invention the performance of these tasks needs the preliminary estimation of the channel response in concomitance with the arrival of a training sequence, known a priori by the receiver. As far as concerns thermal and floor noise, the same is considered spectrally white, gaussian in the amplitudes (AWGN) and temporally uncorrelated to the useful signal. Data detection can avail, for example, of a linear receiver which attempts to de-correlate the transmitted data from the equalized reception, or make provision for a Viterbi processor which performs a Maximum Likelihood Sequence Estimate (MLSE). In such a case it doesn't attempt to equalize the channel in strict sense, but rather uses the knowledge of the channel pulse response (get from the training sequence estimation) to find the data sequence transmitted with the maximum probability. To summarize in a practical case concerning the well known GSM, the receiver firstly estimate the channel response during the reception of the midamble, then the estimate is frozen for all the burst duration and used for the detection of the remaining semi-bursts of data at the two sides of the midamble. This way of operation is strictly valid for stationary channels and low mobile speed. A more realistic approach takes into account the variability of the channel and attempts to extend the channel estimation even outside the midamble in order to pursue said variability and compensate the mobile speed.

As known, a main cause of distortion is the multipath fading due to the scattering of the electromagnetic waves from atmospheric diffusers statistically spread along the radio propagation. Flat or selective fading are generated consequently. The first involves the whole band and is due to small delays along the various paths, being the delays each other correlated and consequently assumed like a phase offset. Selective fading is due to uncorrelated delays comparable to the inverse of the band width; the observed depths inside duration intervals obey to a Rayleigh distribution. The most popular countermeasures against the Rayleigh fading are diagonal interleaving of the code blocks on more transmission bursts, active against selective fading, and the space diversity reception by using at least two antennas spaced more than $\lambda/2$, assuming uncorrelated fading on the two paths.

Recently the opportunity to exploit directive antenna arrays in the Base Station (BTS) of radiomobile systems has been taken into consideration and a certain number of patent applications have been filed on the argument. The directive array theory, in particular the Uniform Linear Arrays (ULA) was originally developed in radar and sonar military applications to the precise aim of localizing the positions of possible targets. A potential target reflects along some directions either a radio or acoustic beam appositely transmitted and its localization involves the estimate of the Direction Of Arrival (DOA) of the reflected waves. The DOA estimation has been also proposed in the radiomobile ambit for associating a temporal channel to each estimated direction of arrival of a useful signal at the BTS side. Such a channel, supposed be symmetric along the two directions, allows a double advantage: saving transmission power both from the Mobile Stations and the BTS because the power is prevalently focussed towards the receivers, and the rejection of cochannel interferents from the BTS only by means of an opportune reception beamforming. Other inventions also based on the DOA estimate (i.e. in the name of ARRAYCOM) allow to implement a Space Division Multiple Access (SDMA) technique, by which more than one mobile station MS are allocated on the same carrier, and the MSs are discriminate each other from the respective DOA. Nevertheless the DOA estimate is very complicate and only profitably in case of exploitation of the SDMA technique, while it appears cumbersome elsewhere, i.e. at the only aim of estimating the channel response.

For the last aim the German patent application DE-A-19639414, inventor: RADEMACHER L. discloses a BTS receiver able to jointly estimate the space-time channel without recurring to a separate DOA estimate. The claim 1 of this citation recites textually:

"Method for the parametrization of a receiving station (BS) comprising adaptive antenna devices (AE) for receiving received signals (es) via time-variant channels, in which method

- the received signals (es) from at least two adaptive antenna devices (AE) are weighted with antenna coefficients (a) and are combined to form received data (z),

- error magnitudes (e) are determined in a device for determining error magnitudes (e) from the comparison of received data (z) and reference data (y) modeling these received data (z),
- channel coefficients (RW) being provided for modeling the reference data (y),
- these error magnitudes (e) are supplied to a channel estimator (ACE),
- the channel estimator (ACE) jointly determines channel coefficients (RW) and antenna coefficients (a) minimizing the error magnitudes (e), and
- the channel coefficients (RW) are provided for a detection of the received data (z) to be evaluated." (The detector is a Viterbi estimator whose short-time decisions are used outside the training sequence of a GSM cellular system data block).

The RADEMACHER's LMS parameter optimization algorithm has recourse to three separate gradients in vectorial form and the optimization is carried out with respect to each gradient of the objective function, one independently from the others, by using the same error (probably this originates the term "joint"); consequently inter-relationships between spatial and temporal terms are neglected and the opportunity to exploit these inter-relationships to improve the equalization definitively lost.

A best profitable algorithm for joint estimating space-time radiomobile channel is disclosed in the International patent application, publication number WO 99/65160, inventor Umberto SPAGNOLINI et al, in the name of the same Applicant Siemens. The invention concerns an equalization method for the cancellation of isofrequential interferers coming from adjacent cells. The described algorithm exploits cross-correlation among space and time parameters for building the matrices used to perform the minimum error in the optimum criterion.

The two mentioned inventions have been conceived for the channel estimate of a second generation cellular system and seem not immediately transferable to a third generation one to which the invention in subject is prevalently but not exclusively directed. Although the invention subject of the present application make use of joint space-time channel estimate, the solved technical problem that will be cleared later on is quite different from the mere joint space-time estimation of the two cited Application.

Nevertheless from the above prior art the advantageous opportunity emerges to consider both spatial and temporal dimensions of the radio channel made possible by the exploitation of directive arrays from the BTSs.

A modern design of a BTS receiver must unavoidable have recourse to sophisticated filtering and detecting algorithms, parallely to the prototyping phase of the receiver even a test of the joint operation of those algorithms becomes essential. This is generally performed by a computer simulation phase which needs a realistic modeling of the radiomobile channel. The modeling should take into account for Rayleigh flat and selective fading, shadow fading, path loss on Line Of Sight (LOS), Doppler effect, etc. Traditional channel models are described in the Recommendation GSM 5.05 issued from European Telecommunication Standard Institute (ETSI). These models are nevertheless only temporal and represent the channel by means of a certain number of time discretized pulse responses. A most recent model which best supports beamforming algorithms are referred to the COST 259 Directional Channel Model. This is a stochastic channel model for Space-Time (S-T) systems that includes both azimuthal and temporal dispersions.

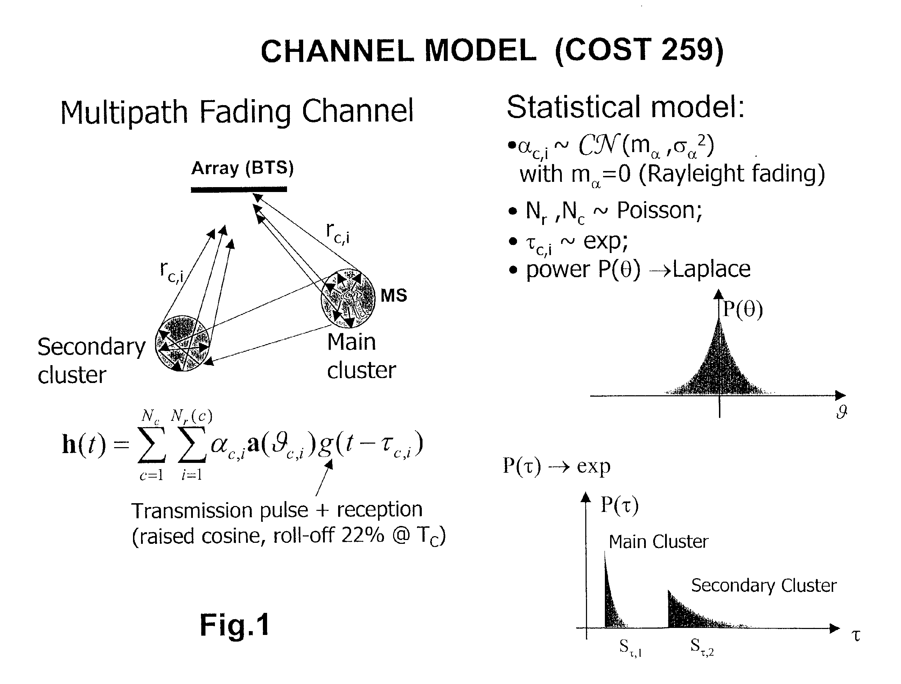

With reference to the Directional Channel Model depicted in fig.1 the channel response depends on N independent local scatters (clusters), each described by multiphats with associated amplitude, delay and azimuth. All the parameters in the model of fig.1 are independent random variables; the probability density functions are assigned according to the propagation environment. In addition to the line-of-sight cluster there are some other clusters, their numbers are Poisson distributed.

The following four COST-259 radio environments have been proposed: Generalized Typical Urban (GTU), Generalized Bad Urban (GBU), Generalized Rural Area (GRA), and Generalized Hill Terrain (GHT). GTU has high time dispersion and low angular dispersion. GBU has high both the dispersions. GRA has low both the dispersions. GHT has low the time dispersion and high the angular dispersion.

Considering an array of antennae having a steering vector a (θ) (being θ the incidence angle between a planar wave and the direction of the ULA), under the hypothesis of only one mobile station transmitting the channel pulse response estimable from a directive array is:

$$\mathbf{h}\left(t\right) = \sum_{c=1}^{N_c} \sum_{i=1}^{N_r(c)} a_{c,i}\,\mathbf{a}\left(\theta_{c,i}\right) g\left(t, \tau_{c,i}\right) \qquad (1)$$

where: $c$ indicates the actual cluster; $N_c$ the number of clusters; $N_r$ the number of rays which the cluster reflects towards the BTS; $\theta_{c,i}$ is a relevant direction and $\tau_{c,2}$ is the dalay of ray $r_{c,2}$, and $g\,(t)$ is the transmission pulse filtered by the reception filter.

Since now the main problems concerning radiomobile channel estimation and uplink signal detection have been duly considered as far as concerns the traditional second generation mobile systems, in case, equipped with directive arrays. That constitutes background notions for the invention that will be disclosed which is mainly directed (but not exclusively) to a third generation mobile system (UMTS). The usefulness of the discussed arguments depends on the fact that the new UMTS evolves from the preceding knowledge. However a simple translation is not enough because of the greater complexity of the UMTS in comparison with GSM due to the different multiplexing approach, complexity that is dramatically increased when an attempt to use directive arrays is considered. In the new UMTS ambit, differently from the GSM, more users are simultaneously active on the same carrier, and the BTS receiver shall provide for all of them by simultaneously receiving from all the antennas, so it will be soon realized what complexity comes out . In this case adequate innovations have to be introduced for the purpose of managing the complexity in a proper way suitable for optimizing the performances of the receiver while maintaining acceptable costs.

Radiomobile systems based on Code Division Multiple Access (CDMA) are subjected to an International standard charged to a 3GPP study group. Presently there are several outstanding system proposals which differ each other mainly for the band width of the modulated carrier, the type of adopted full-duplexing either FDD (Frequency Division Duplexing) or TDD (Time Division Duplexing), by the use or less of an additional Time Division Multiple Access (TDMA), and finally for the synchronization of the BTSs. CDMA technique is implemented convolving each oversampled bit of the transmission symbols by a pseudo-noise spread sequence, temporarily assigned by the network both to a so-called Resource Unit (i.e. the Mobile Station) and the BTS for communicating full-duplex. The spread sequences being each other orthogonal, that means ideally can be seen as noise at the output of a matched filter to a specific sequence. The original band of the symbol sequence is widened consequently and the carried information scattered on the whole transmission band. Midambles and data scrambling codes are used for building the transmission burst and both of them have one to one relation with the cell; they are semipermanent data for allowing the discrimination of the Resource Units (RU) of the serving cell from the interferents of the neighbour cells. As far as concerns the midamble, the $K$ CDMA RUs must use K different midambles in order to be recognizable to the BTS, supposing the burst preliminarily synchronized. The $K$ midambles are obtainable through $K$ phase shift of a unique periodic sequence having period $P = KW$ chips, being $W$ the maximum time dispersion of the channel. Obviously the greater is number $K$ the longer the midamble will be.

## OUTLINED TECHNICAL PROBLEM

The aim is that to outline the technical problem arising from the high parametrization of the channel estimation charged to a third generation BTS employing a directive array of $M$ antennas to Space-Time (S-T) exploring the various channels.

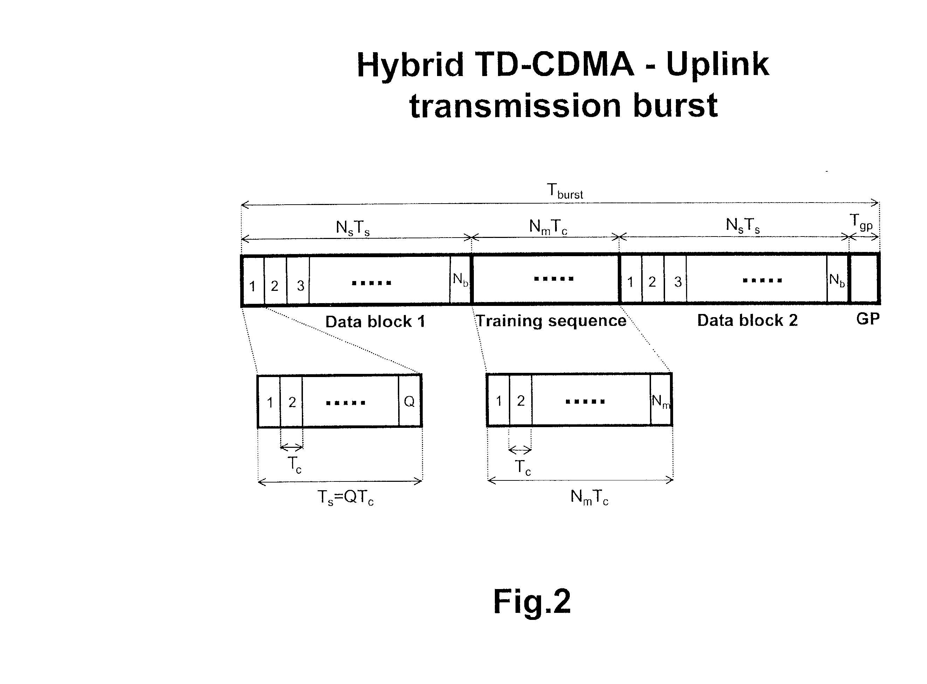

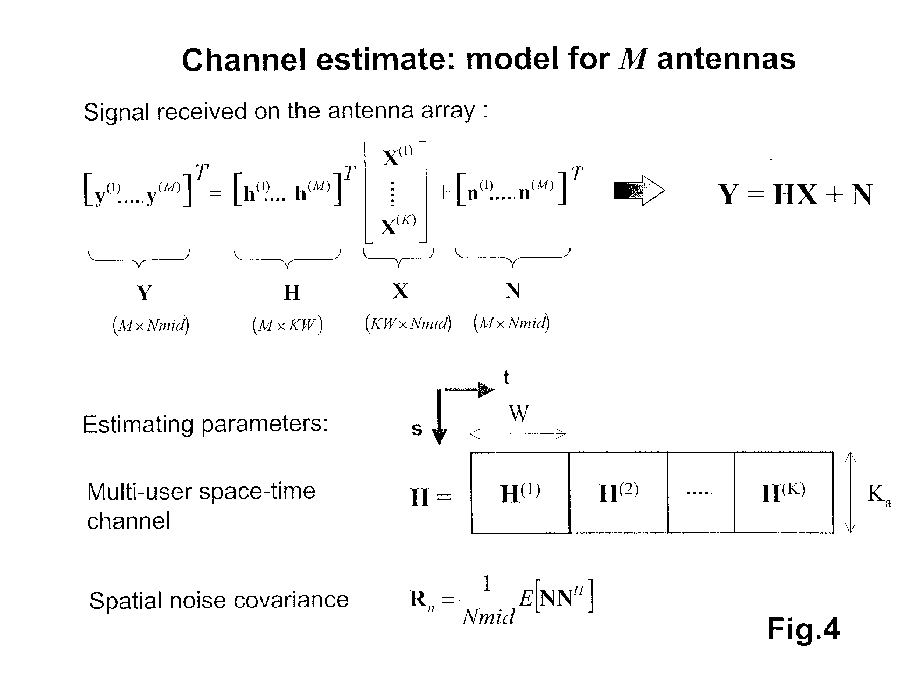

With reference to the Figures 2.3 and 4 the equivalent low pass discrete-time mathematical model of the uplink hybrid TDMA-CDMA mobile radio system is considered. In fig.2 an uplink transmission burst is depicted in which a Training sequence in midamble position is visible between two Data blocks 1 and 2, the last being followed by a Guard Period GP to avoid interference with the successive burst. The discrete-time model is obtained by sampling at the chip rate $1/T_c$ the signals received by the antennas after the chip matched filter: Within the same cell, in the same frequency band and in the same time slot, $K$ users are assumed to be simultaneously active. Each mobile station (MS) is equipped with a single transmitter antenna, at the base station (BTS) an antenna array of $M$ elements is employed. The users transmit in bursts each consisting of the two data blocks and the user specific training sequence (midamble) for channel estimation. Each data block contains $N_s$ QPSK symbols of duration $T_s = QT_c$ spread by a user-specific signature $c_k$ of Q chips for the $k$-th user. The midamble consists of $N_m = N - W - 1$ chips, $W$ is the channel length. For example, in a first case referred to the TDD-UTRA specification $N = K \times W = 456$ chips ($K = 8$ and $W = 57$); in a second case referred to a Chinese CWTS standard $N = 128$ chips ($K = 8$ and $W = 16$). At the BTS the received signals are separated into two subsets of samples, the first one depending on the midamble training sequences and the second one depending on the two data blocks of symbols. The conventional approach for the estimation of the S-T channels from the samples of midamble is based on the Least Square (LS) estimate of the coefficients of the FIR filter that describes the channel model. Then S-T multi-user detection is carried out on the two blocks of signals received before and after the midamble in order to estimate the $2N_sK$ data symbols in the burst. The detection needs the preceding knowledge of the channel estimates and the signature sequences $c_k$, for $k = 1,..., K$. It is known art that the midamble tails needs to be cancelled before data detection.

The multi-user detection for space-time channels is known, for example, from the article of X. Wang, H. V. Poor, "Space-time multi-user detection in multiple CDMA channels", published in the review IEEE Trans. Signal Processing, Vol. 47, pp. 2356-2374, September 1999. This type of detection is useful to contrast with the so-called Multiple Access Interference (MAI). MAI interference depends on the fact that the $K$ signatures are not perfectly orthogonal at the receiver inputs regardless of the spreading codes used from the transmitter. The cause of MAI being both the dispersion of the delays on the MS-BTS channel (selective Rayleigh fading) and the imperfect chip synchronization. Preliminary to the multi-user detection a multi-user estimation shall be also performed; in this case channel is estimated simultaneously for all the users so that all the user are considered sources of signal for each other.

Intercell interference further challenges the detection, specially when traffic increases and the cluster size reduction appears to be profitable for promoting a more intense reuse of the midambles and the scrambling codes. Obviously the multi-user detection is only charged to the BTS receiver because, differently from a mobile station receiver, it simultaneously manages signals from all the active users in the served cell, or in the sector in case of tri-settorial cells.

Fig.3 preliminarily shows the various vectors and matrix of the system used for estimating the temporal channel $h^{(m)}$ of the $K$ active users receiving data from a single antenna $m$.

Fig.4 extends the preceding system to the $M$ antennas for estimating the complete S-T channel $\mathbf{H} = [\mathbf{H}_1.....\mathbf{H}_K]$ of the same $K$ users. The meaning of the various elements involved, so as the dimensions of the vectors and matrices are clearly indicated in the Figures.

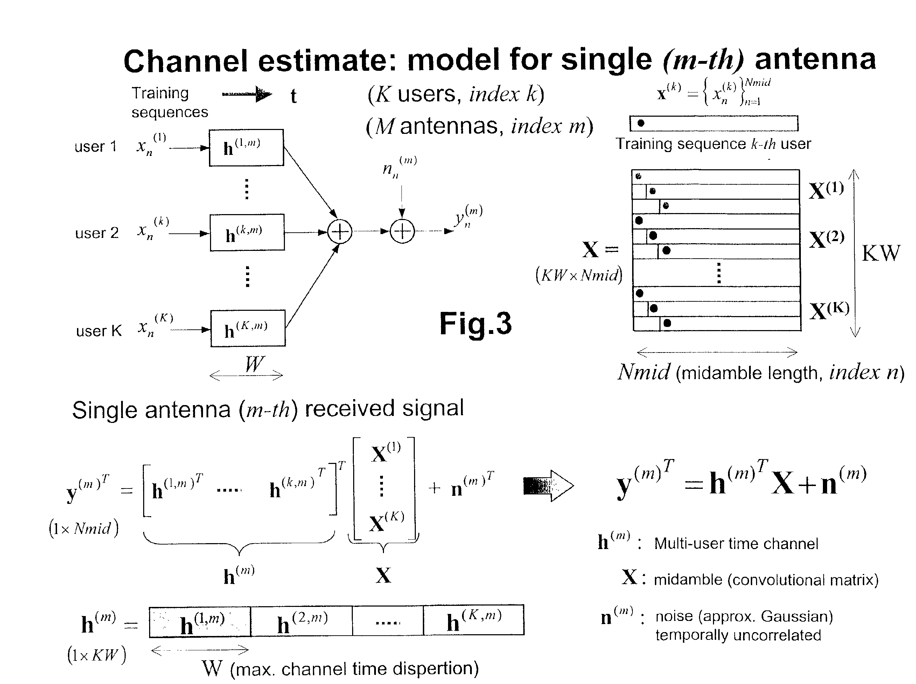

With reference to the Figures 3 and 4 the propagation channel for the $k$-th user is described by the S-T matrix $H_k$ that is composed of the $M$ temporal FIR filters $\{h_{k,m}\}_{=1}^{Kk}$:

$$H_k = [h_{k,1},...,h_{k,M}]^T. \tag{2}$$

Each FIR $h_{k,m}$ represents the channel impulse response (of lenght $W$) for the link between the $k$-th user and the $m$-th antenna. Here we assume $M < W$. The estimation of the S-T channel matrices $\{H_k\}_{k=1}^{K}$ is based on the transmission of the $K$ training sequences $\{X_k\}_{k=1}^{K}$, where $X_k$ is the $W \times N$ Toeplitz matrix that denotes the convolution with the $k$-th midamble. Let Y =[y(1),...,y($N$)] be the $M \times N$ matrix containing $N$ samples of the signals received by the $M$ antennas, $\mathbf{H} = [\mathbf{H}_1.....\mathbf{H}_K]$ and $\mathbf{X} = [\mathbf{X}_1^T.....\mathbf{X}_K^T]^T$ are multi-user matrices suitably defined to include, respectively, the $K$ channel matrices and the $K$ training sequence matrices. The received signal can be written as

$$\mathbf{Y} = \sum_{k=1}^{K} \mathbf{H}_k \mathbf{X}_k - \mathbf{N} = \mathbf{HX} - \mathbf{N}, \tag{3}$$

where $\mathbf{N} = [\mathbf{n}(1),...,\mathbf{n}(N)]$ models both the additive ambient noise and the inter-cell interference, it is assumed to be temporally uncorrelated and spatially correlated with space covariance matrix $R_n$.
The conventional approach for the estimation of the matrices $\{H_k\}_{k=1}^{K}$ is the direct LS estimation of the $K \times M \times W$ coefficients of the FIR model (2). The residuals from the channel estimation are then used to estimate $R_n$:

$$\hat{H}= [\hat{H}1,.... \hat{H}_K] = YX^H (XX^H)^{-1}, \tag{4}$$

$$\hat{R}_n = YY^H - YX^H (XX^H)^{-1}XY^H. \tag{5}$$

where $(.)^H$ denotes the Hermitian transposition.

This approach does not use any a priori information about the S-T features of the propagation but it simply estimates brute force all the $M$ FIR filters. This involves the following drawbacks:

1. a noisy estimate of the S-T channel in presence of the usual training sequences having necessarily limited length;
2. a great complexity of the multi-user data detection because of the recurs to a full-dimensional space-time channel correlation matrix for all the K users.

The second drawback is easily understandable, while as far as concerns the first one a relevant hint is done in the article of Monica NICOLI and Umberto SPAGNOLINI (also designated inventors in the present application), titled: "MULTIUSER SPACE-TIME CHANNEL ESTIMATION FOR CDMA UNDER REDUCED-RANK CONSTRAINT), published on IEEE 2000, page 147 - 151. The article has essentially theoretical nature and refers to the opportunity to constrain each matrix $H^{(k)}$ describing the $K$ S-T channels to have Reduced-Rank (RR), in order to describe parsimoniously (i.e. with minimum distortion) the S-T channel $\mathbf{H} = [\mathbf{H}_1,...,\mathbf{H}_K]$. The rank is said to reflect the minimum number of orthogonal space and time channel that can be used under the parsimony constraint. The rank is further said to depend on the number of wavefronts that sampled by the array can be considered as independent. Therefore in a multipath propagation the rank-order depends on the angle of arrival and delay spreads compared to the resolution of the array and of the signature waveforms (or their bandwidth). In a RR approach the MAI interference is implicitly taken into account by estimating the $K$ channels $\{\mathbf{H}^{(k)}\}_{k=1}^{K}$ jointly. Further in the article (expression 9 pag. 147) the opportunity of spatially pre-whitening the full-rank $\{\mathbf{H}^{(k)}\}_{k=1}^{K}$ S-T channel estimate has been highlighted in order to obtain the reduced-rank $\{H^{(k)}_{MU}\}_{k=1}^{K}$ — $\{H^{(k)}_{RR-MU}\}_{k=1}^{K}$ estimate. The performance of parsimonious channel estimation have been obtained and graphically presented by simulating the uplink of TDD-UTRA proposal for IMT-2000.

The invention which is the subject of the present application fulfills a further step in the direction open by the article, namely that of really obtaining a space-time multi-user receiver for uplink, able to adaptively modulate the grade of parsimony in dependence on the variable channel condition. This is not so immediate from the preceding theory; besides the intrinsic complexity of the matter forces to solve further remarkable theoretical-practical problems faced to the aim of conjugate complexity with the true opportunities offered by the actual technology, taking the cost into account. All that will better appear in the course of the description.

The following arguments further enlarge the parsimony criterion announced in the cited article. The accuracy to which a channel estimate can be performed using a known training sequence inversely depends (approximately) on the ratio between the number $L_{unknown}$ of parameters to be estimated and the length $L_{training}$ of the training sequence, being said parameters, for example, taps of the temporal and spatial filters. Recurring to training sequences very length it should be possible estimate the $L_{unknown}$ parameters near exactly, because the variance of the estimation decreases. Choosing to estimate a lower number of parameters ($L'_{unknown} < L_{unknown}$) the estimate should be run into an error, also termed polarization, due to the under-parametrization of the channel. Nevertheless in this event the estimation of the remaining parameters should be better, because the ratio $L'_{unknown}/L_{training}$ is lower than $L_{unknown}/L_{training}$. The full rank estimation of the channel matrix $\mathbf{H}$ requires $K \times M \times W$ parameters, while a Reduced Rank estimation requires a lower number depending on the skill in the exploitation of the a-priori information about the space-time propagation features along the radio path. Therefore in presence of $L_{training}$ finite, a trade-off between under-parametrization and accuracy of the estimate shall be pursued. A consequent parsimony principle can be issued to state that: "it doesn't need estimate more parameters than the strict necessary".

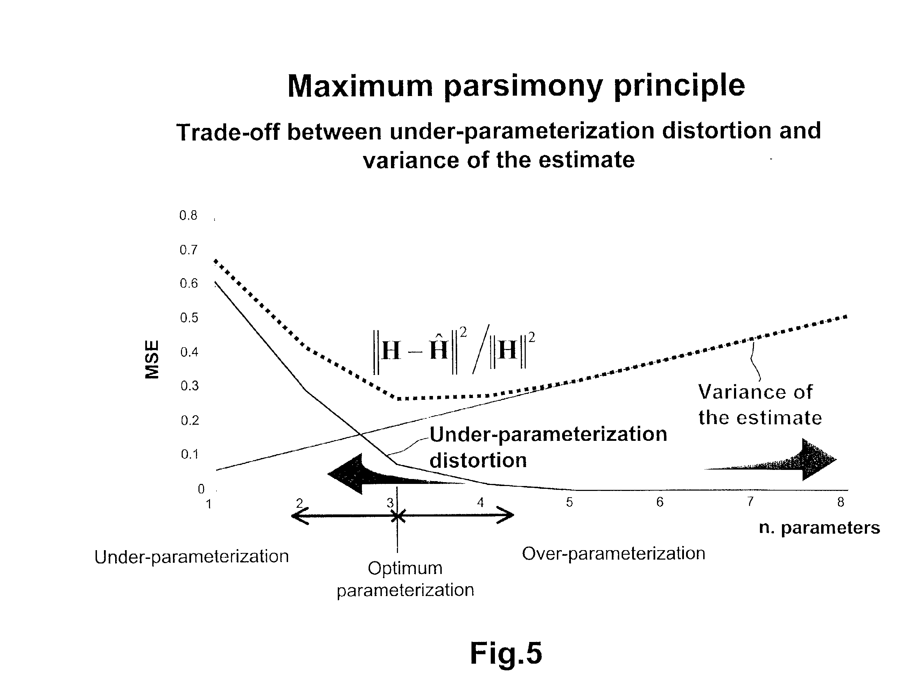

Fig.5 graphically shows the parsimony principle relatively to a hypothetical RF scenario. The abscissa reproduces a scale proportional to the parameters to be estimate and the ordinate the MSE error of the expression $\|\mathbf{H} - \mathbf{\hat{H}}\|^2 / \|\mathbf{H}\|^2$ (being $\mathbf{\hat{H}}$ the estimated channel) which represents the accuracy of the estimate. In the hypothetical RF scenario on which the **Fig.5** is based, the minimum MSE is obtained in correspondence of a parsimonious estimation using 3/8 of the maximum parameters. The MSE on the upper curve is the sum of two terms: the distortion error, that is large for low rank and depends on the characteristics of the propagation channel (delay/angle spreads, number of clusters), and the noise that increases with rank and depends on the interference level, other than the increasing of $L_{unknown}/L_{training}$.

The application of the parsimony principle in the design of a multi-user receiver for uplink TD-CDMA involves some practical implications that could at first-sight discourage the design of the receiver; in fact, the parsimonious estimation of the channel seems not so parsimonious like the word indicates, that because the reduction of the number of spatial and temporal filters needs in any case the preliminary full-rank estimation of the multi-user channel matrix and the additional handling for the rank reduction. Nonetheless in spite of a slight increment in the computational complexity of the channel estimation, it has been considered above that the rank-reduction allows a considerable performance as far as concerns the MSE error of the estimation. The complexity of the multi-user detection is instead always reduced in the reduced-rank detection, because the number of involved spatial and temporal filters is lower.

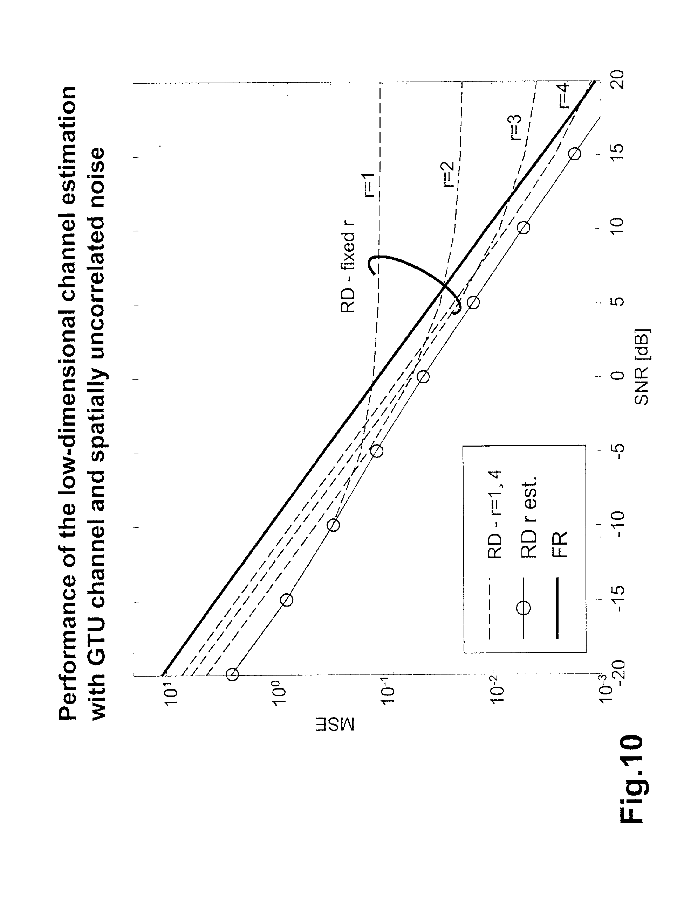

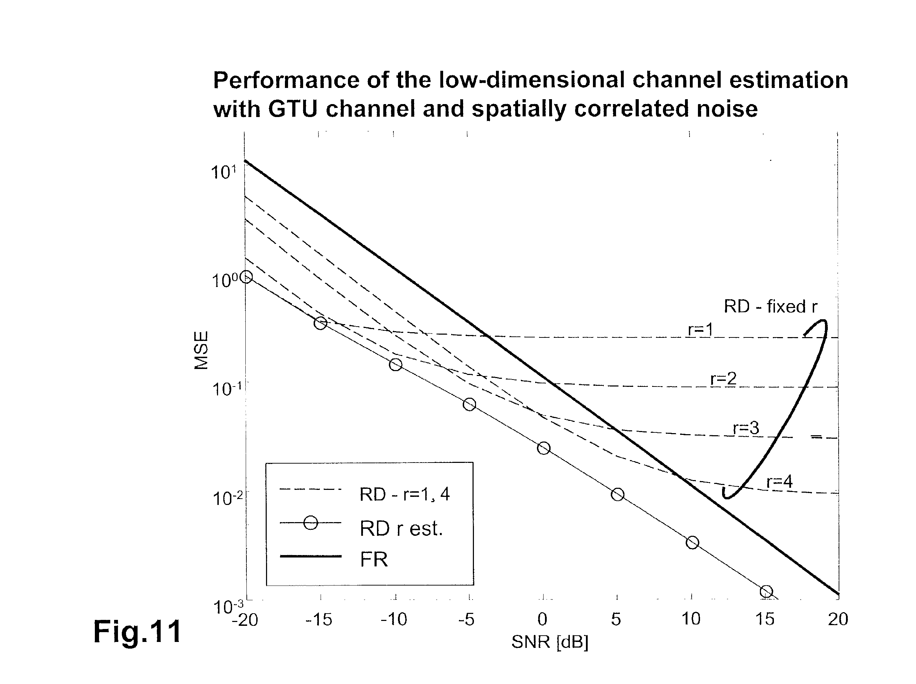

Turning the attention to the two firstly cited inventions concerning GSM, it can be argued they have not a so intense parametrization to force solutions based on parsimonious estimation, although parsimony should be even exploited in a GSM-BTS. As far as concerns the article of the M. NICOLI and U. SPAGNOLINI, some relevant suggestions are instead taken, but relevant new features have been added to solve a technical problem apparently not yet well outlined in the new UMTS context. The reduced-rank estimation method disclosed in the article appears "static" in the choice of the optimal rank and could be further improved to allow optimal estimation. That because further investigations (that will be confirmed discussing the Figures 10 and 11 about the variation of the MSE error (Fig.5) for the various ranks in function of SNR (Signal to Noise Ratio) or SIR (Signal to Interference Ratio), have proved that: for low SNR (or SIR) low rank is the preferred solution as it has the least number of unknowns to be estimated. For large SNR the distortion (polarization of the estimate) becomes remarkable and more ranks are needed. The tracking of the best structure of the S-T channel matrix seems then a difficult task to be performed by the receiver, mainly because said structure shall cope with the multipath structure of the radio propagation depicted in the expression (1).

## PURPOSES OF THE INVENTION

The main purpose of the present invention is that to indicate a multi-user receiver, preferably for uplink CDMA, performing joint space-time multi-channel estimation and joint multi-user data detection, able to adaptively estimate the optimum trade-off between distortion and noise variance as dependent on the interference level and the propagation environment. That also addresses the purpose of the invention to indicate a modular S-T receiver whose structure is upgraded or downgraded consequently for estimating the actual leading space-time characteristics of the channel.

**SUMMARY AND ADVANTAGES OF THE INVENTION**

To achieve said purposes the subject of the present invention is a Base Station receiver, as disclosed in claim 1.

From the above claim it can be appreciated that the receiver is usable in all the cases where the S-T channel can be preliminarily estimated by any method (e.g. LS channel estimate) and a re-estimation procedure can be applied to reduce the number of unknowns to only those that are effectively necessaries when compared with channel and interference conditions. The advantages of the invention are evident in TD/CDMA systems for multi-user approach, where the complexity is high, but it is applicable also in the GSM system for single user approach.

In comparison with the conventional approach where the channel model is assumed to be full-dimensional (Full-Rank), here the complexity of the model is reduced and the number of parameters to be re-estimated for the single user becomes $r_k(M - W)$, usually $<< MW$. The approximation with realistic propagation channel model COST-259 for the TDD-UTRA standard holds as far as $r_k$ ranges from $1 \div 4$ and the array is composed of $M = 8$ antennas.

It should be noticed that at least one space and time filter are used and thus $r_k \geq 1$, this implies that the estimation structure is modular in the sense that the number of cascaded space and time filters can be increased by starting from one space-time filter up to $M$ space-time filters. The actual number $r_k$ is adaptively estimated by optimizing the trade-off between distortion and noise variance as dependent on the interference level and the propagation environment. This reduction of the dimensions of the problem results not only in better estimation performance when evaluated in term of mean square error (MSE) but also in the reduction of the complexity of the space-time detector.

**BRIEF DESCRIPTION OF THE DRAWINGS**

Further objects and advantages of the present invention will be made clear by the following detailed description of an embodiment thereof and the annexed drawings given for purely non-limiting explanatory purposes and wherein:

- **Fig.1** shows the channel model COST 259.
- **Fig.2** shows a typical transmission burst for TD-CDMA 3GPP radiomobile systems.
- **Fig.3** shows the basic vectors used for estimating multiple temporal channel with a single antenna.
- **Fig.4** shows the basic matrices used for estimating a spatial-temporal channel with $M$ antennas.
- **Fig.5** shows a graphical representation of a principle which inspires the channel estimation of the invention.

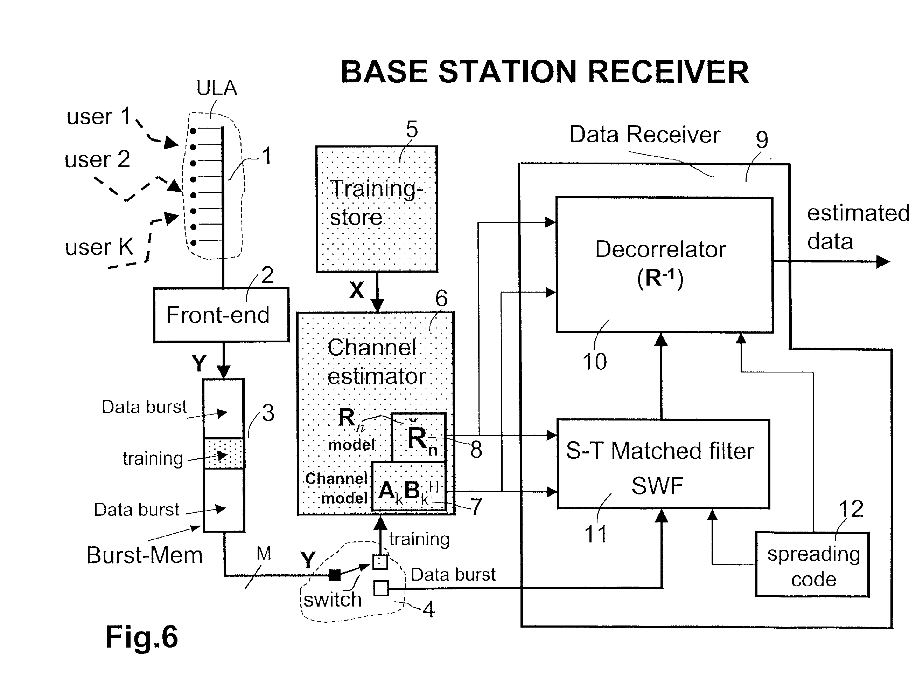

- **Fig.6 to 9** show the architecture of the Base Station receiver of the present invention;
- **Figures 10** and **11** show families of curves reproducing comparative simulation results of the channel estimator of fig.6

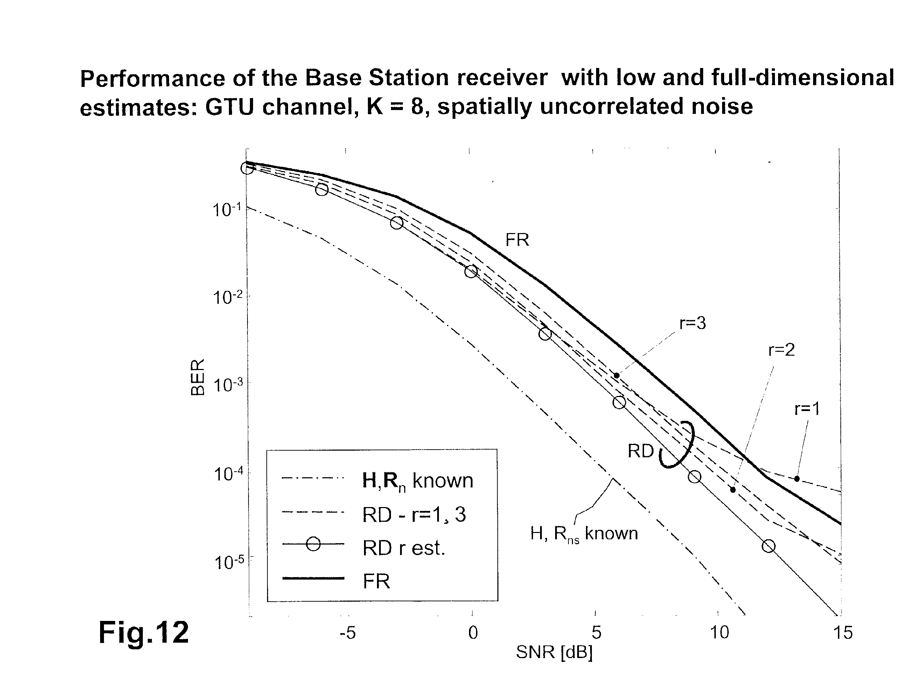

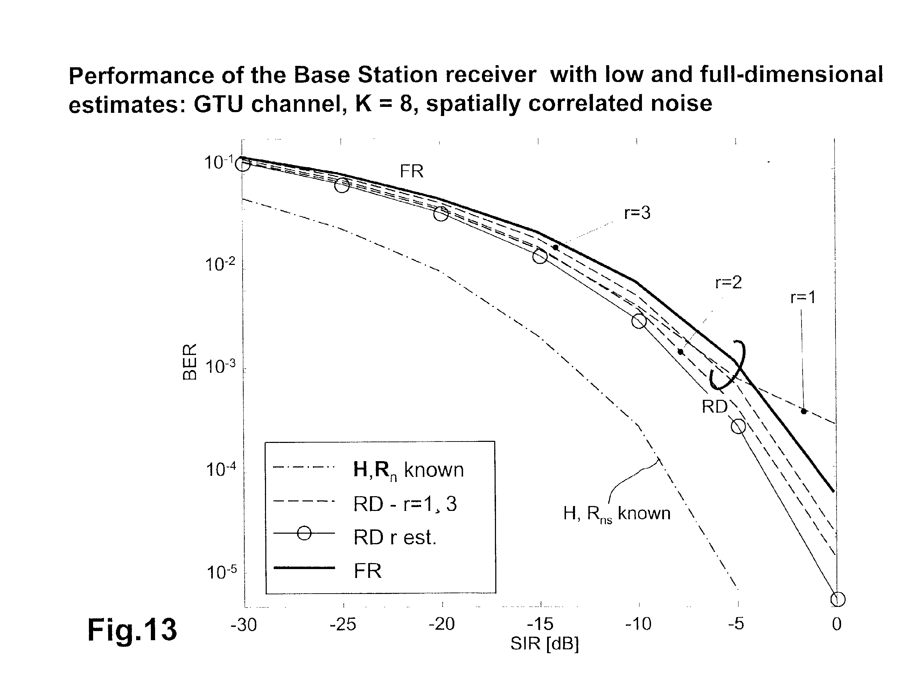

- **Figures 12** and **13** show families of curves reproducing comparative simulation results of the multi-dimensional BASE STATION RECEIVER of fig.6.

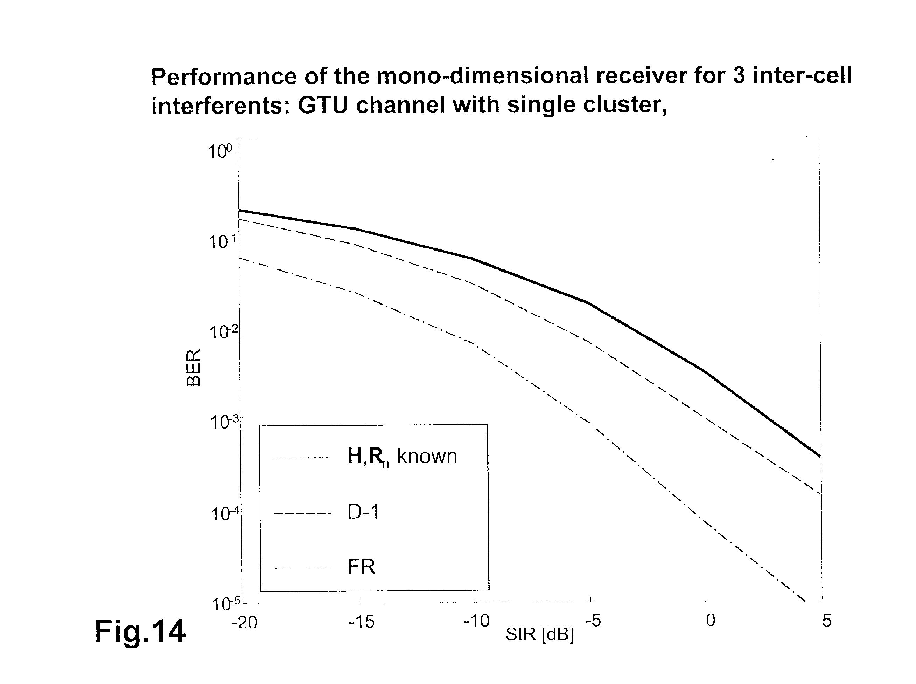

- **Fig.14** shows families of curves reproducing comparative simulation results of a mono-dimensional BASE STATION RECEIVER of fig.6.

**DETAILED DESCRIPTION OF AN EMBODIMENT OF THE INVENTION**

**Figures 1 to 5** have already been discussed. Before the description of the preferred embodiment the following theoretical arguments are proposed for justifying a successive so-called pre-whitening of the estimated matrix (4), in order to make the $K$ users each other spatially uncorrelated. For this aim it is needed to evaluate the covariance matrix of the channel estimated as:

$$R_{hh} = E[\delta h \delta h^H] = (XX^H)^{-1} \otimes R_n \qquad (6)$$

where $\delta h = vec(\delta \mathbf{H}) = vec(\hat{\mathbf{H}} - \mathbf{H})$ denotes the stack of the columns of the estimation error matrix $\hat{\mathbf{H}} - \mathbf{H}$ into a vector and $\otimes$ denotes the Kronecker product. Some simplification are in order only for the reduced complexity estimation receiver that will be short-term disclosed:

1. The covariance matrix of the interference can be approximated from the estimate (5):

$$R_n \simeq \hat{R}_n \tag{7}$$

2. The inverse of the training sequences for different users is computed by assuming that the training sequence are approximately orthogonal:

$$XX^H = \begin{bmatrix} \bar{X}_1 X_1^H & X_1 X_2^H & \cdots & X_1 X_K^H \\ X_2 X_1^H & X_2 X_2^H & & X_2 X_K^H \\ \vdots & & \ddots & \vdots \\ X_K X_1^H & X_K X_2^H & & X_K X_K^H \end{bmatrix} \simeq \begin{bmatrix} X_1 X_1^H & 0 & \cdots & 0 \\ 0 & X_2 X_2^H & & 0 \\ \vdots & & \ddots & \vdots \\ 0 & 0 & & X_K X_K^H \end{bmatrix} \tag{8}$$

and therefore, for the temporal pre-whitening, it follows:

$$(XX^H)^{-1} \simeq \begin{bmatrix} (X_1 X_1^H)^{-1} & 0 & \cdots & 0 \\ 0 & (X_2 X_2^H)^{-1} & & 0 \\ \vdots & & \ddots & \vdots \\ 0 & 0 & & (X_K X_K^H)^{-1} \end{bmatrix} \tag{9}$$

3. The covariance matrix can be approximated as

$$R_{hh} \simeq \begin{bmatrix} (X_1 X_1^H)^{-1} \otimes \hat{R}_n & 0 & \cdots & 0 \\ 0 & (X_2 X_2^H)^{-1} \otimes \hat{R}_n & & 0 \\ \vdots & & \ddots & \vdots \\ 0 & 0 & & (X_K X_K^H)^{-1} \otimes \hat{R}_n \end{bmatrix} \tag{10}$$

and therefore for the pre-whitening the estimates are decoupled thus yieldind

$$E[\delta h \delta h_k^H] \simeq (X_k X_k^H)^{-1} \otimes \hat{R}_n \tag{11}$$

**Fig.6** shows the high level architecture of the Base Station Receiver of the present invention. With reference to the figure the receiver is constituted by the following blocks numbered from 1 to 12: ULA, Front-end, Burst-Mem, Training-store, Channel model, Channel estimator, $R_n$ model, Data Receiver, which in its turn includes: Decorrelator, SWF & S-T Matched filter, and spreading code. The names of the blocks indicate their meaning. *M*-antenna Uniform Linear Array 1 is connected to the Front-end 2 which provides to:

- correctly receive the RF signals transmitted from all the *K* users,
- filtering and down-converting the RF signals,
- Q-PSK demodulating, sampling and A/D converting the base band signal,
- base band filtering with a digital filter matched to the chip obtaining the base band digital samples Y corresponding to the sum of the *K* transmitted bursts (see 3) that are stored in the block Burst-Mem 3 to be processed by the base band receiver of the invention.

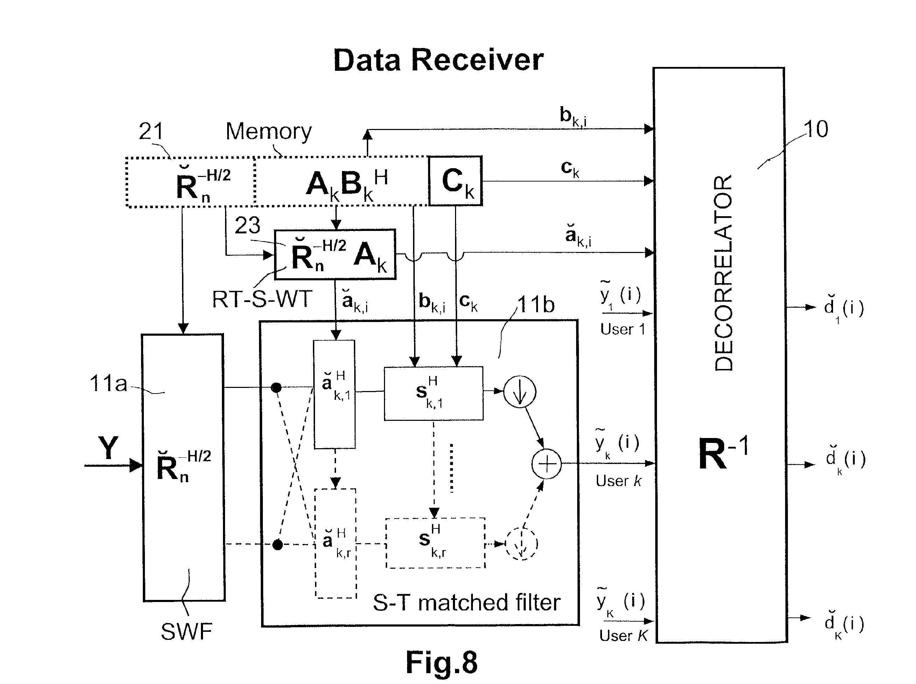

The receiver processes the composite signal Y in two alternate steps ideally set by a switch 4: a first one involves blocks Training store 5 and Channel estimator 6, and provides to estimate the channel parameters stored in block Channel model 7 and $R_n$ model 8, while the second one uses the preceding estimates for detecting the two semi-bursts of data parallely for the *K* users which keep the Base Station Receiver busy. Block Channel estimator 6 receives the samples Y corresponding to the transmitted training sequences and the sample X corresponding to the stored training sequences and estimates both the channel matrix $H_k$ and the spatial noise covariance matrix $H_n$, which represents the content of block Channel model and $R_n$ model respectively. The two estimated matrices are sent to the block Data Receiver 9 referenced in Fig.8.

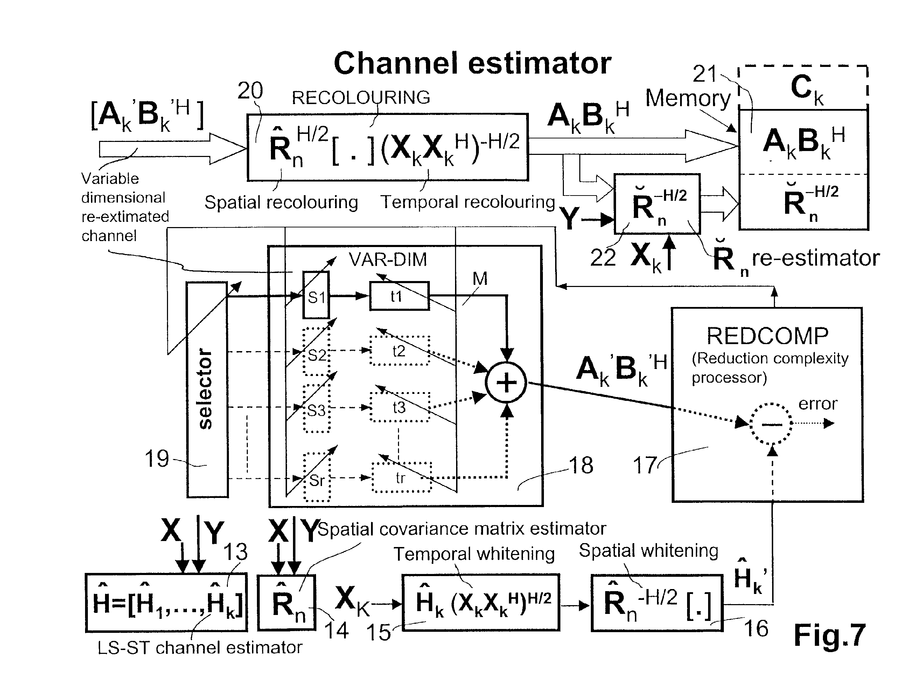

Fig.7 shows the detail of block Channel estimator 6 of the preceding figure. With reference to the Fig.7 the outlined blocks are listed from 13 to 22, they are the following: LS-ST channel estimator, Spatial covariance matrix estimator, Temporal whitening, Spatial whitening, REDCOMP, selector, VAR-DIM, RECOLOURING, $R_n$ re-estimator, and Memory. Some blocks and signal are indicated with subscript $k$ to be referred to the user $k^{th}$, in such a case it is obvious that $K$ similar blocks and signals are provided even if not depicted for reason of brevity.

Block LS-ST channel estimator 13 is reached from the signals X and Y (fig.6) and exploits them to firstly perform a full-dimensional Least Square (LS) estimate $\mathbf{H}_k$ of the S-T channel $\mathbf{H}_k$, in a known way, for example by means of Fast Fourier Transform (FFT) and its Inverse. Block Spatial covariance matrix estimator 14 performs the estimation $\mathbf{R}_n$ of a spatial covariance matrix $\mathbf{R}_n$ starting from the received signals X and Y (fig.6). The estimated channel $H_k$ is temporal whitened by the Temporal whitening filter 15 and then forwarded to the spatial whitening filter 16. For the aim of temporal whitening signal $\mathbf{X}_k$ relative to the $k^{th}$ user feeds the input of Temporal whitening filter 15 by means of a S/P converter (not shown in fig.7) which parallelizes upon $W$ ways the single chip of the sequence relative to the $k^{th}$ user.

The channel model which comes out from the complex chain of algebraic operators is a spatial and temporal whitened channel model named H'$_k$. This model is full-dimensional and needs to be complexity reduced for the reasons outlined in the introduction. Blocks REDCOMP 17 and VAR-DIM 18 together provide to this aim. Processor block REDCOMP is the most relevant of the two, it fulfills two tasks: a first one is that of decomposing the whitened channel model H'$_k$ of the $k^{th}$ user into a set of filtering cascades $A'_k B'^{H}_k$. each constituted of a beamformer $A'_k = [a'_{k,1},....,a'_{k,rk}]$ followed by a temporal FIR $B'_k = [b'_{k,1},...,b'_{k,r,k}]$ of dimensions $M \times r_k$ and $W \times r_k$. respectively. Each space and time filter are constrained to be orthogonal (after pre-whitening) by the particular operation of the REDCOMP block which will be explained short time:

$$\begin{cases} \mathbf{a}'^{H}_{k.m} \mathbf{a}'_{k.n} = 0 \\ \mathbf{b}'^{H}_{k.m} \mathbf{b}'_{k.n} = 0 \end{cases} \text{ for } m \neq n$$

The criterion performed in the decomposition indirectly seeks for the minimum error between channel model $\hat{\mathbf{H}}'_k$ and the new representation $A'^{H}_k B'^{H}_k$ which is better idoneous for complexity reduction. Complying with the decomposition criterion allows the re-estimated parameters of the various filters be determined, but the number of the filtering cascades other than a first one is still pending. So the second task charged to REDCOMP processor 17 is to determine the effective number $r_k \ll M$ of the filtering tandem relative to the $k^{th}$ user, in accordance with the above mentioned parsimony principle limiting at the only effectively needed the channel parameters to be re-estimated. The complicated operation of processor REDCOMP is supported by the memory block VAR-DIM 18 which stores the variable configuration of the reduced-complexity model during its elaboration before the exact number $r_k$ be determined. Inside the block VAR-DIM a number $r_k$ of filtering cascades are visible, in which: beamformers relevant to the spatial components $a'_{k,i}$ are denoted by $s_i$, while temporal FIRs relevant to the temporal components $b'_{k,i}$ are denoted by $t_i$. Only the first filtering branch is drawn in solid, because the relative presence is always assured, the remaining branches are dotted because their exact number depend on the result of the second task charged to the processor REDCOMP 17, in its turn depending on the actual level of the inter-ceil interferences. For this aim block "selector" 19 selects the branch of block VAR-DIM 18 which has to be presently built up; after which a series of arrows superimposed to the various FIRs select, in turn, filter $s_i$ and $t_i$ of the selected branch whose components $a'_{k,i}$ and $b'_{k,i}$ have to be updated and stored. Vectors that result from the equivalent branch filtering are summed up for all the $r_k$ branches as in the following:

$$\sum_{r=1}^{r_k} \mathbf{a}'_{k.r} \mathbf{b}'^{H}_{k.r} = \mathbf{A}'_k \mathbf{B}'^{H}_k \simeq \hat{\mathbf{H}}'_k. \tag{13}$$

and the product (13) is both delivered to the processor REDCOMP 17 and to the block RECOLOURING 20. The first one performs the error computation during re-estimation of the channel $H_k$, while the second one performs spatial and temporal inverse whitening filtering to obtain the recoloured product $A_k B^{H}_k$, which is stored in the Memory 21 at the disposal of the Data Receiver of Fig.8. Lastly, the Channel estimator in Figure shall re-estimate the spatial noise covariance matrix $R_n$, directly in the form $\breve{R}_n^{-H/2}$ suitable for spatial whitening, making use of the new reduced complexity channel parameters $a_{k,i}$ and $b_{k,i}$. This task is performed from the block $R_n$ re-estimator 22 which receives the recoloured product $A_k B^{H}_k$ and signals Y and $X_k$ and returns $\breve{R}_n^{-H/2}$. Also the re-estimated covariance matrix $\breve{R}_n^{-H/2}$ is stored in memory 21 for the successive use in Joint Detection. Block memory 21 shows, for simplicity, a dashed box representing room for the spreading sequence $C_k$ of fig.6 assigned to the $K$ users.

Now some mathematical hints are done to get an insight into the Channel estimator of Fig.7. The opportunity of approximating the Full Rank $\hat{H}_k$ with $r_k$ spatial signatures $\{a_{k,r}\}_r^{r_k}$ and $r_k$ temporal filters $\{b_{k,r}\}^{r_k}$, in such a way that redundancy of the Full Rank $H_k$ is avoided in the latter representation, is achieved by constraining that each beamformer and temporal FIR filter is orthogonal to the other $r_k$ - 1 filters. Orthogonality is constrained for pre-whitened estimates in order to take into accounts the spatial correlation of the interference and the non-ideality of the training sequences (i.e., $XX^H \neq I$). In comparison with the conventional approach where the channel is assumed to be full-dimensional ($r_k$ = $M$, $A_k$ = $I_M$ and $B_k$ = $H_k$), here the complexity of the model is reduced and the number of parameters to be re-estimated becomes $r_k(M + W)$, usually $<< MW$. It should be noticed that the number of degrees of freedom remains the same as the constraints (12) corresponds to $r_k(r_k$ - 1) equations and the unit-norm constraint are $r_k$ equations thus leading to $r_k$ $(M + W)$ - $r_k^2 = r_k(M + W - r_k)$ parameters to be re-estimated.

Since the users can be considered as decoupled, for the $k$-th user the channel estimate is whitened as

$$\hat{H}'_k = \hat{R}_n^{-H/2} \hat{H}_k (X_k X_k^H)^{H/2} \tag{14}$$

this is approximated by the low-dimensional channel $A' B'^H$, where $A'_k = [a_{k,1},...,a_{k,r_k}] = \hat{R}^{-H/2} A_k$ are $r_k$ orthonormal whitened beamformers and $B'_k = [b_{k,1}', ...,b_{k,r_k}'] = (X_k X_k^H)^{1/2} B_k$ are $r_k$ orthogonal whitened FIR filters:

$$\hat{R}'_k \approx A'_k B'^H_k \tag{15}$$

The $r_k$-dimensional spatio-temporal components (Reduced Rank) is obtained by minimizing the error of the approximation:

$$\{A'_k, B'_k\} = \arg \min_{A'_k, B'_k} \|\hat{H}'_k - A'_k B'^H_k\|_F. \tag{16}$$

in the Frobenious norm. The optimization is known to be given starting from defining the following matrixes:

$$\hat{Z}_k = \hat{H}'_k \hat{H}'^H_k, \tag{17a}$$

for $n$ = 1, ... $r_k$

$$\hat{U}_k = eigv_{r_k} \{\hat{Z}_k\} \tag{18}$$

where $eigv_{rk}$ denotes the $M \times r_k$ matrix of the $r_k$ leading eigenvectors of the matrix $\hat{Z}_k$. Whitened estimated $A'_k$, $B'_k$ are given by:

$$A'_k = \hat{U}_k \tag{19}$$

$$B'k = (X_k X_k^H)^{1/2} \hat{H}_k^H \hat{R}_n^{-1/2} \hat{U}_k \tag{20}$$

A definitive estimate of ST channel is given by:

$$A_k = \hat{R}_n^{H/2} A'_k \tag{21}$$

$$B_k = (X_k X_k^H)^{-1/2} B'_k \tag{22}$$

With respect to the conventional estimation this approach provides an improvement in the estimation performance as well as a reduction of the complexity for the equalization processing, some relevant results are shown in Figure 10 to 14. The space noise covariance matrix for the data estimation is re-estimated from the residuals of the channel esti-

mation $\hat{N}$ = $Y - \Sigma^K_{k=1} A_k B^H_k X_k$, as: $\breve{R}_n = \hat{N}\hat{N}^H / N$.

The number $r_k$ of space-time filters inside VAR-DIM block 18 is not known and need to be estimated by increasing approximations of the reduced-complexity re-estimate. It should be noticed that at least one space and time filter are used and thus $r_k \geq 1$, this implies that the estimation structure of block VAR-DIM (fig.7) is modular in the sense that the number of space and time filters can be increased by starting from one space-time filter up to $M$ space-time filters, according to the particular operation of the Reduction complexity processor REDCOMP 17. The optimum $r_k$ is the one that minimizes the mean square error (MSE) of the channel estimate $\|H_k - A_k B^H_k\|_F$ but this MMSE optimization cannot be carried out in practice. Here $r_k$ is obtained according to the information theory criterion based on the Kullback-Leibler information measure as proposed in M. Wax. I. Ziskind, "Detection of the number of coherent signals by the MDL principle", IEEE Trans. Acoustic Speech and Signal Processing, Vol. 37, pp. 1190-1196, August 1989, which is incorporated by reference, for the estimation of the number of independent sources impinging on a uniform linear array. The information theory criterion is based on the Minimum Description Length principle (MDL), applied in the present case for the description of the temporal covariance matrix of the full-dimensional channel H relative to the $k^{th}$ user. The MDL algorithm for the selection of the optimum $r_k$ inside the modular structure of block VAR-DIM 18 is implemented by REDCOMP processor 17 through the following steps:

1. define a vector L($M \times 1$) of null element;
2. compute the matrix $T = H'_k H'^H_k$ and its eigenvalue $\lambda_2$ ($i = 1,.....M$);
3. execute for $p = 0 : M - 1$
4.

$$L(p+1) = -W(M-p)\log\left(\frac{\left(\prod_{i=p+1}^{M}\lambda_i\right)^{\frac{1}{M-p}}}{\frac{1}{M-p}\sum_{i=p+1}^{M}\lambda_i}\right) + \frac{1}{2}p(2M-p+1)\log(W) \quad (23)$$

5. minimum of vector $L \rightarrow$ (*pos. val*) (position in the vector, minimum value)
6. if (*pos* - 1) = 0 then $r_k = 1$ else $r_k = pos$ - 1
7. $r_k$ is the output of the MDL algorithm (repeated for each user)
It should be noticed that $r_k \geq 1$ (at least one ST element is adopted by the receiver) and the final value of $r_k$ corresponds to the minimum MSE on the upper curve of fig.5.

At this point of the description the reduced-dimensional (Reduced-Rank) channel model $A_k B^H_k$ recoloured, and the re-estimated space noise covariance matrix $\breve{R}_n^{-H/2}$ are stored in memory 21, so that data detection (estimation) performed by block Data Receiver (fig.6) starts by turning the switch 4 (fig.6) in the relative direction.

With reference to the fig.8 it can be appreciated that the Data Receiver 9 (fig.6) includes the cascade of the following three blocks: SWF 11 a, as many parallel S-T matched filters 11 b as the $K$ users, the DECORRELATOR 10 in the manner of a multi-user detector. The memory block 21 (fig.7) is dotted in fig.8 with enabled room (in solid) for the signatures $C_k$ for all the $K$ users. In this processing step of the memorized burst the transmission of one single data block (before or after the midamble) is considered. The processing step avails of the preceding estimated elements: $\breve{R}_n^{-H/2}$ and re-estimated channel $A_k B^H_k$. An additional block 23 named RT-S-WT is cascaded to the only $A_k$ beamformers stored in memory 21 for performing a spatial whitening of $A_k$ by using the re-estimated covariance matrix $\breve{R}_n$. More precisely this whitening is obtained through the following espression:

$$\breve{A}_k = \breve{R}_n^{-H/2} A_k \quad (24)$$

Equation (24) contains all the $\breve{a}_{k,1},..., \breve{a}_{k,r}$ beamformers.

Following is described the discrete-time model for the detection of a data transmitted by the $K$ users. Let $d_k$(*i*) denote the $i^{th}$ symbol transmitted by the $k^{-th}$ user, d(*i*) = $[d_1(i)\cdots d_K(i)]^T$ is the vector containing the $i^{th}$ symbol for all the $K$ users, d = $[d(1)^T \cdots d(N_s)^T]^T$ is the overall data vector of length $N_s K$. For user $k$ the convolution of the spreading sequence $c_k$ with the $\ell^{th}$ temporal channel $b_{k,\ell}$ is denoted by the composite signature $s_{k,\ell} = C_k b_{k,\ell}$ of length $Q + W - 1$, with $\ell = 1, ..., r$. For simplicity of notation all the users are assumed to have the same number of S-T dimensions $r_k = r, \forall k$. The multi-user Data receiver estimates the user data d from the whole received signals y(*n*) = $[y_1(i)\cdots y_K(i)]^T$, with $n = 1,...,N_s Q - W - 1$, using the beamspreading filters $\breve{a}_{k,\ell}$ and the signatures $s_{k,\ell}$.

From the discrete-time model of above, the $k^{th}$ S-T matched filter block 11b can be qualified as including $r$ beamformers

$$; \; \tilde{a}_{k,\ell}^{H} \; = \; (\check{R}_n^{-H/2} a_{k,\ell})^{H},$$

for $\ell = 1,...,r$ (whitening space matched filters). Each beamformer is followed by a corresponding temporal filter $s_{k,\ell,\ell}^{H}$. The outputs of the $r$ temporal filters $s_{k,\ell}$ are sub-sampled by factor $Q$ before reaching the $r$ inputs of a summation block which provides the filtered sequence $\tilde{y}_k(i)$ matched to the estimated channel.

The complete output $\tilde{y}(i) = [\tilde{y}_1(i) \cdots \tilde{y}_K(i)]^T$ of the $K$ space-time matched filters 11b is obtained by whitening the received signal y($n$) with the spatial filter SWF 11a which executes the product $\check{R}_n^{-H/2}Y$, then the whitened signal is passed through the $Kr$ beamformers $\tilde{a}_{k,\ell}^{H} = (\check{R}_n^{-H/2} a_{k,\ell})^{H}$, for $k = 1,...,K$ and $\ell = 1, ..., r$ (whitening space matched filters). Each beamformer $\tilde{a}_{k,\ell}^{H}$ is followed by a corresponding FIR temporal filter $s_{k,\ell}^{H}$. The filtered sequence $\tilde{y}_k(i)$ is derived by summing up the outputs of the $s_{k,\ell}^{H}$ filters for $\ell = 1,..,r$ and the filtered outputs for all the $K$ users $\tilde{y}(i) = [\tilde{y}_1(i) \cdots \tilde{y}_K(i)]^T$ are fed into the DECORRELATOR block 10 which acts like a linear S-T multi-user detector that estimates the user data d($i$) = $[d_1(i) \cdots d_K(i)]^T$.

It can been observed that this receiver has a simpler structure with respect to the full dimensional space-time receiver, as it does not exploit all the spatio-temporal dimensions in the matched filtering. Indeed for the conventional receiver the structure is the same of Fig.8 but with $M$ space-time matched filters instead of $r$, $a_{k,\ell}$ is a $M$-dimensional vector of zeros with a one entry in the $\ell$-th position ($A_k = I_M$) and the temporal matched filter has $b_{k,\ell} = h_{k,\ell}$ ($B_k = H_k$).

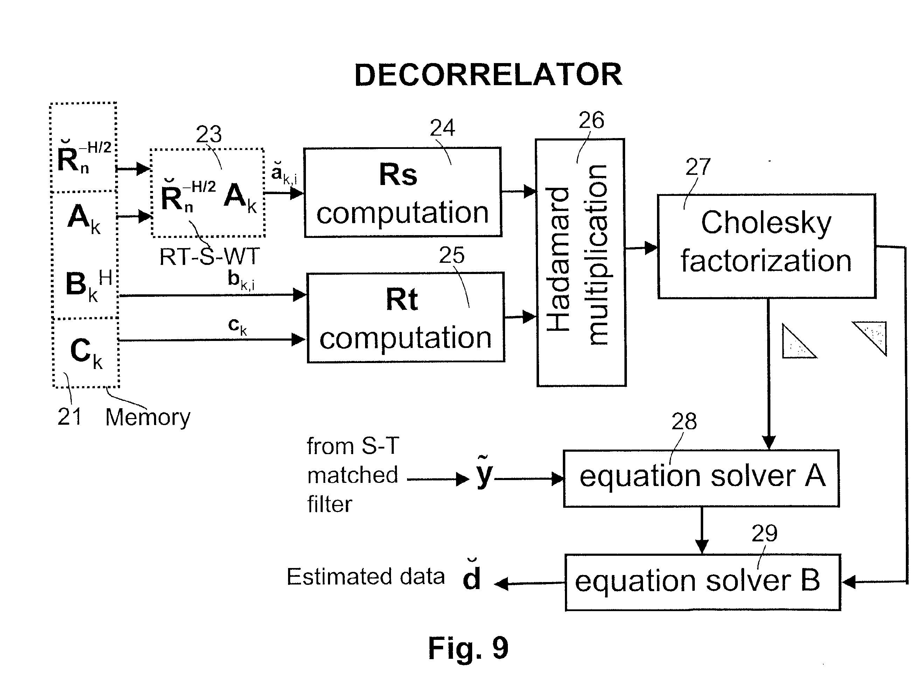

Fig.9 shows the linear DECORRELATOR block 10 based on an advantageous embodiment founded on Cholesky factorization method. With reference to the Figure the proposed general architecture of the DECORRELATOR 10 includes the following blocks: $R_s$ computation 24, $R_t$ computation 25, Hadamard multiplication 26, Cholesky factorization 27, equation solver A 28, and equation solver B 29. For clarity, the same memory block 21 of Figures 7 and 8, and block RT-S-WT 23 of fig.8 are reproduced. Mathematical arguments supporting the diagrammatical representation of fig.9 begin from arranging the matched filter outputs of fig.8 for all symbols into the following vector $\tilde{y} = [\tilde{y}^T(1) \ldots \tilde{y}^T(N_s)]^T$, then the system model for the overall data block reduces to:

$$\tilde{y} = Rd + \tilde{n} \tag{25}$$

where the noise vector is $\tilde{n} \sim \mathcal{N}(\mathbf{0}, \mathbf{R})$. $\mathbf{R}$ is the overall S-T correlation matrix with dimensions ($N_sK \times N_sK$) and has the block Toeplitz structure denoted by

$$R = \mathcal{T}_{N_s}([R^{(0)} \ldots R^{(\Delta)}]),$$

$$R = \begin{bmatrix} R^{(0)} & R^{(1)} & \cdots & R^{(\Delta)} & & \\ R^{(-1)} & R^{(0)} & R^{(1)} & \cdots & R^{(\Delta)} \\ \ddots & & & & \ddots \\ & R^{(-\Delta)} & \cdots & R^{(-1)} & R^{(0)} & R^{(1)} \\ & & R^{(-\Delta)} & \cdots & R^{(-1)} & R^{(0)} \end{bmatrix}. \tag{26}$$

where $\Delta = \frac{Q-W-1}{Q}$ is the temporal spread in symbol intervals. Each block $R^{(i)} = R^{(-i)H}$ has dimensions $K \times K$ ($i = 0,...,\Delta$) and can be written as the Hadamard (element-wise) product between the spatial and the temporal correlation matrices:

$$R^{(i)} = G^H R_s \circ R_t^{(i)} G \tag{27}$$

$G = I_K \otimes 1_r$, $1_r$ is a $r$-dimensional vector of ones and o denotes the Hadamard product.

The $Kr \times Kr$ matrix $R_s$ contains the correlations between the $Kr$ spatial beamformers $\tilde{a}_{k,\ell}^{H}$, whereas the $Kr \times Kr$ matrix $R^{(i)}$ depends on the correlations between the temporal filters $s_{k,\ell}$ (delayed of $i\Delta$).

As already said the outputs $\tilde{y}$ of the S-T matched filter 11b (25) are fed into the DECORRELATOR block 25 that estimates the user data d($i$) = $[d_1(i) \cdots d_k(i)]^T$. The ideal detector removes both Inter-Symbol Interference (ISI) and Multiple Access Interference (MAI) by processing the whole received data block : $\check{d} = M\tilde{y}$. In particular, the decorrelating de-

tector is M = $R^{-1}$, the MMSE detector is M = $(R+\sigma^2 I_{NK})^{-1}$ if the data symbols are independent and uniformly distributed.

The space-time structure of channel estimate allows to easily compute the ST correlation matrix R: the element by element multiplication that results in each $\mathbf{R}^{(i)}$ block evaluation has low cost compared to conventional receiver (especially with $r << M$). By Cholesky decomposition of matrix R it is possible to easily resolve linear system that supply data estimation. The linear equation solver get out estimated data $\check{d}$ · that are input for successive channel decoding (not shown in the fig.9).

Most of the computational complexity of the linear system resolution comes from the Cholesky factorization of the sparse and large correlation matrix. As R has a block Toeplitz structure, this factorization requires in the order of $O[K^3 N_s \Delta]$ operations as shown by J. Rissanen, "Algorithms for triangular decomposition of block Hankel and Toeplitz matrices with application to factoring positivew matrix polynomials", Math. Comp., Vol. 27, pp. 147-154, January 1973. If the size of the data block $N_s$ is very large ideal detection may not be feasible. A more practical solution can be derived by using a sliding observation window that spans $N_a << N_s$ symbol lengths, as it results from M. J. Juntti, B. Aazhang, "Finite memory-length linear multi-user detection for asynchronous CDMA communications", IEEE Trans. on Comm., Vol.45, pp. 611-622, May 1997. An alternative solution is an approximation of the Cholesky factor that exploits the block Toeplitz structure of R and the property that $R^{(i)} = 0$ for $|i| > \Delta$, with $\Delta << N_s$. It turns out that the Cholesky factor $R^{1/2}$ is nearly block Toeplitz and can be calculated from the factorization of a $N_a K \times N_a K$ matrix of the cited Rissanen. For both methods the computational complexity is reduced to $O[K^3 N_a \Delta]$, with a negligible degradation in performance.

## SIMPLIFIED EMBODIMENT

Single space/time receiver is based on the choice $r_k = 1$ (i.e., no MDL is performed). Below is the table (values are $\times 10^6$) with computational complexity of standard receiver based on Full-Rank (FR) channel estimate (4) and the reduced complexity estimate with $r_k = 1$. The values are the number of real-multiplications (MUL) for each of the steps of the receiver: channel estimation, S-T matched filter, computation of the correlation matrix (26), Cholesky factorization of correlation matrix (26), forward/backward substitutions. The comparison is based on the following values: $M = 8$, $K = 8$, $W = 57$, $Q = 16$, $N_s = 61$ (for each of the semi-burst). The Cholesky factorization is based on the choice $N_a = 7$ (the factorization for $N_a = N_s = 61$ would have implied $1.3 \cdot 10^6$ MUL).

| | $H$ est | $R_n$ est | ST MF | Corr. matrix | Decorrelation | Total |
|---|---|---|---|---|---|---|
| FR | 0.27 | 5.31 | 2.2 | 0.4 | 0.62 | 8.8 |
| $r_k = 1$ | 0.37 | 6.32 | 0.81 | 0.051 | 0.62 | 8.2 |

Since the eigenvector for the largest eigenvalue has to be computed according to the equations (17a-18), the eigenvector computation is based on the power method (here 3 iterations are considered as enough for the algorithm to converge in many cases). Here the computation of the complexity is based on the approximation $X_k X_k^H \simeq I$ which holds true for TDD-UTRA standard.

As a further comment the conventional and the reduced complexity method have comparable computational complexity as the channel of conventional method is based on M FIR filters of W samples each is reduced to one FIR filter with W samples and one beamformer with M samples. This simplify the correlation matrix (26) in the multi-user detection.

## PERFORMANCES

In the remaining Figures the performance of low-dimensional channel estimation and S-T Multi-User Detection (MUD) are evaluated by simulating the uplink of the UTRA-TDD described in standard ETSI, "Universal Mobile Telecommunications System (UMTS):Physical channels and mapping of transport channels onto physical channels (TDD)" ETSI, TS-125 221 V3.3.0 2000-06. Numerical results are for $M = 8$ omnidirectional antennas, $K = 8$ users are active in the cell, the channel-length is $W = 57$. The traffic burst 1 of TDD-UTRA is considered, spreading codes have $Q = 16$, raised cosine pulse with roll-off 0.22 and chip rate 3.84 Mchips/s. Data blocks of $N_s = 61$ QPSK modulated symbols are considered, training sequences are chosen according to standard specifications with length $N_m = 512$. The propagation channel is simulated as defined by the Generalized Typical Urban environment (GTU) of COST-259 Directional Channel Model. In the simulations both spatially uncorrelated and correlated noise (generated by 3 intercell interferers) are considered.

Figures 10 and 11 respectively for uncorrelated and correlated space noise, both compare the performance of the low-dimensional channel estimate with the full dimensional estimate in terms of the normalized MSE $\|\Delta H\|^2/\|H\|^2$ vs. the signal to noise ratio $SNR = E[(\|\mathbf{h}^{(k,m)}\|^2)]/\sigma^2$. The considered case are: Reduced-Dimensional channel (RD) with fixed $r$, RD channel with estimated $r$, and Full Rank (FR) channel. As expected for low SNR the 1-D approximation is the preferred solution as it has the least number of unknowns to be estimated. For large SNR the distortion becomes remarkable and more space-time dimensions are needed. The channel estimate with MDL selection of the number of space-time filters (circle line) outperforms the fixed-dimensionality estimates (with $r$ = 1,2,3,4, dashed lines) and the FR estimate (thick line) for all the SNR values.

The receiver, complete with channel estimation and S-T MMSE multi-user detection, is considered in the remaining Figures. **Fig.12** shows the performance for uncoded bits vs. $SNR = E_{bit}/N_0$, for uncorrelated space noise. **Fig.13** shows the performance of the receiver in presence of 3 intercell interferers evaluated in terms of BER vs. signal interference ratio (SIR). The legend is again the previous one. From the curves emerges that, if a fixed number of filters is adopted for the low-dimensional estimate (dashed lines) the distortion becomes very marked for large SIR/SNR, and the estimate performs worse than the FR (thick line); the adaptive selection of the dimensionality by MDL criterion (circle line) guarantees a gain with respect to FR of approx. 3dB for all SNR/SIR values.

In Fig.14 the performances of a mono-dimensional receiver ($r$ = 1) are evaluated for a propagation channel with lower spatio-temporal dispersion. The channel model is GTU, with number of cluster fixed and equal to 1, $K_i$ = 3 inter-cell interferers are simulated, the signal to noise ratio is $SNR = 20dB$. The 1-D receiver provides a gain of approx. 3dB even for large SIR.

Simulations results presented in the Figures 10 to 14 have proven that the Base Station receiver of the present invention provides improvements in system performance (evaluated in terms of BER) by at least 3dB in signal to noise ratio (SNR). That because a particular channel estimation has been adopted by which the number of filters is selected adaptively according to the interference level and the characteristics of the propagation environment.

## Claims

1. A Base Station receiver connected to a directional array of $M$ antennas for receiving bursts of data from K mobile stations of a cellular telephony system, the receiver having:

   - a full-dimensional space-time channel model (13) in form of memory matrix table ($\hat{\mathbf{H}}$) including a certain number of elements corresponding to relevant $W$ samples of the dispersive length of the channel pulse response of all the $K$ users, with $k$ = 1,....$K$, for the link between the $k^{th}$ mobile station transmitting antenna and the $m^{th}$ receiving antenna of the Base Station, and for all the $N$ samples of the $k^{th}$ training sequence assigned to the $k^{th}$ user, being the $K$ training sequences each other approximately uncorrelated;
   - multi-channel parameters estimating means (6) for estimating the whole samples of said full-dimensional channel model (13) for the $K$ users simultaneously by correlating the base band digital samples of the signals received on the array with the corresponding $K$ training sequences (X) of samples stored (5) in the receiver;
   - multi-channel noise and interference estimating means (14) receiving base band digital samples (Y) of the signals received on the array to which subtract the residual of the channel estimation for obtaining an estimate of the spatial noise for all the $K$ users, being the temporal correlation of noise and interference considered as known;
   - means for convolving (11) base band digital samples of data transmitted from all the $K$ users with relevant estimated parameters of the channel model , obtaining $K$ sequences ($\breve{y}_1^{(i)},...,\breve{y}_k^{(i)},...,\breve{y}_K^{(i)}$) of the $K$ users spatially and temporally matched to the channel;
   - multi-user detecting means (10) receiving the estimated parameters of the channel model, the $K$ matched filtered sequences of the $K$ users for jointly de-correlating the original data ($\breve{d}_1^{(i)}, ..., \breve{d}_k^{(i)}., ..., \breve{d}_K^{(i)}$) transmitted from all the $K$ users,

   **characterized in that** said multi-channel parameters estimating means (6) further includes:

   - reduction-complexity means (17, 18, 19) for re-estimating said full-dimensiona space-time channel model (13) with a reduced set of re-estimated parameters ($A_k^{'}$, $B_k^{'H}$) in order to obtain one or more cascades ($s_1$, $t_1$, ..., $s_r$, $t_r$), each cascade including a beamformer ($s_1$, .... $s_r$) and a temporal FIR filter ($t_1$, .... $t_r$), being said cascades decoupled each other and their numbers depending on the specific user;
   - reduction-complexity control means (17) arranged for limiting the re-estimation to a number $r_k$ of said cascades ($s_1$, $t_1$,..., $s_r$, $t_r$) for each of the $K$ users, $r_k$ being chosen dynamically as the number of independent cascades that minimizes the redundancy of the full-dimensional space-time channel model (13) according to the information theory criterium.

2. A Base Station receiver according to claim 1, **characterized in that** each of said cascade ($s_1$. $t_1$, ... $s_r$,$t_r$) is equivalent to a user branch matrix, and for each user equal elements in the associated $r_k$ branch matrices are summed up to obtain complete cascade matrix;

3. A Base Station receiver according to claim 1 or 2, **characterized in that** it further includes means for constraining temporal uncorrelation (15), also termed temporal whitening filtering means, acting upon the estimated full-dimensional channel model $\mathbf{H} = [\mathbf{H_1}, ...,\mathbf{H_k}, ...,\mathbf{H_K}]$ (13) before using it for the re-estimation, for obtaining a temporal whitened channel model (15) by uncorrelating said model (13) from the intrinsic temporal correlation residual from the non ideality of the training sequences $(X_k)$.

4. A Base Station receiver according to claim 3, **characterized in that** said means for constraining temporal uncorrelation (15) being arranged for multiplicating said channel model estimated matrix $\mathbf{H}_k$ by a first temporal factor $(X_k X_k^H)^{H/2}$ where $X_k$ indicating the $k^{th}$ training sequences $(X_k)$ of samples stored in the receiver (5) and said exponent $H$ indicating transposed coniugated operator.

5. A Base Station receiver according to one of the preceding claims, **characterized in that** said multi-channel noise and interference estimating means (14) being arranged for estimating a space covariance matrix $\mathbf{R}_n$ of the sample collection of additive ambient noise and inter-cell interference among the various antennas, and for storing it in a noise channel memory (21) of the receiver.

6. A Base Station receiver according to claim 5, **characterized in that** it further includes means for constraining spatial uncorrelation (16), also termed spatial whitening filtering means, acting on said temporal whitened channel model (15) before using it for the re-estimation, for obtaining a temporal and spatial whitened channel model $\mathbf{H}'_k$ (16) for the $k^{th}$ user by further uncorrelating said temporal whitened channel model (15) from the spatial correlation due to the inter-cell interferers.

7. A Base Station receiver according to claim 6, **characterized in that** said means for constraining spatial uncorrelation (16), being arranged for using the estimated space covariance matrix $\mathbf{R}_n$ by multiplicating said temporal whitened channel model (15) for the $k^{th}$ user by a first spatial factor $R_n^{-H/2}$, where exponent $H$ indicating transposed coniugated operator, and obtaining said temporal and spatial whitened channel model $\mathbf{H}'_k$ (16).

8. A Base Station receiver according to one of the preceding claims, **characterized in that** said reduction-complexity control means (17, 18, 19) being arranged for re-estimating said temporal and spatial whitened channel model $\mathbf{H}'_k$ (16) for the $k^{th}$ user for obtaining said reduced set of re-estimated parameters $(A'_k.B'^H_k)$.

9. A Base Station receiver according to one of the preceding claims, **characterized in that** said reduction-complexity control means (17, 18, 19) being arranged for minimizing for all the $K$ users the absolute value of the difference between the parameters of said temporal and spatial whitened channel model $\mathbf{H}'_k$ (16) and corresponding reduced set of re-estimated parameters $(A'_k, B'^H_k)$, in so determining the number $r_k$ of said cascades $(s_1, t_1, ..., s_r, t_r)$ for each of the $K$ users.

10. A Base Station receiver according to any claims from 6 to 9, **characterized in that** it further includes means (20) for promoting spatial and temporal re-correlation, also termed inverse-whitening means, acting on said reduced set of re-estimated parameters $(A'_k, B'_{Hk})$ in order to reconstruct said channel model estimated matrix in a form based on said cascaded spatial and temporal FIR filters $(A_k, B'_{Hk}$ for each of the $K$ users.

11. A Base Station receiver according to claim 10, **characterized in that** said means (20) for promoting spatial and temporal re-correlation being arranged for multiplicating said reduced set of re-estimated parameters $(A'_k . B'_{Hk}$ by a second spatial factor $R_n^{H/2}$ which is the inverse of the first one $R_n^{-H/2}$ and by a second temporal factor $(X_k X_k^H)^{-H/2}$ which is the inverse of the first one $(X_k X_k^H)^{H/2}$, obtaining reduced set of re-estimated and inverse-whitened parameters $A_k, B^H_k$ for each of the $K$ users, where $A_k$ is a matrix including said $r_k$ beamformers and $B^H_k$ is a matrix including said $r_k$ temporal FIR.

12. A Base Station receiver according to claim 11, **characterized in that** said multi-channel noise and interference estimating means (22) being arranged for re-estimating the space covariance matrix $(R_n)$ of the sample collection of additive ambient noise and inter-cell interference among the various antennas, by subtracting from the base band digital samples (Y) of the signals received on the array the residual of the channel re-estimation with the reduced set of re-estimated and inverse-whitened parameters $A_k, B^H_k$, obtaining a re-estimated space covariance matrix $\breve{R}_n$ stored in the noise channel memory (21) of the receiver.

**13.** A Base Station receiver according to claim 12, **characterized in that** it further includes a spatial whithening filter (SWF) of the base band digital samples Y of the signals received on the array, arranged to multiplicate the signal Y by a third spatial factor $\check{R}_n^{-H/2}$, obtaining a spatial-whitened.

**14.** A Base Station receiver according to claim 13, **characterized in that** said means for promoting spatial uncorrelation (23) being further arranged for multiplicating said matrix $A_k$ by said third spatial factor $\check{R}_n^{-H/2}$, obtaining $r_k$ spatial re-whitened beamformers $\check{a}_{k,1}$ ,..., $\check{a}_{k,r}$ .

**15.** A Base Station receiver according to one of the preceding claims, **characterized in that** said convolving means (11b) including said re-estimated parameters of the channel model maintaining the same structure of $r_k$ cascades ($s_1$, $t_1$,..., $s_r$, $t_r$) for each of the $K$ users.

**16.** A Base Station receiver according to one of the preceding claims, **characterized in that** it includes means for despreading said base band digital samples of data transmitted from all the $K$ users in case the signal were transmitted multiplied with orthogonal spreading sequences associated to the users one to one, to perform the so-called CDMA technique, the despreaded symbols being said $K$ sequences ($\tilde{y}_1^{(i)}$,...,$\tilde{y}_k^{(i)}$,..., $\tilde{y}_K^{(i)}$)) of the $K$ users spatially and temporally matched to the channel.

**17.** A Base Station receiver according to claim 16, **characterized in that** the re-estimated parameters ($s_{k,1}$, ..., $s_{k,r}$) of said temporal FIR equivalent to as many signatures are obtained by convolving the stored temporal re-estimated parameters ($b_{k,1}$, ...,$b_{k,r}$) by said spreading sequence ($c_k$).

**18.** A Base Station receiver according to claim 17, **characterized in that** said multi-user detecting means (10) being arranged for calculating a correlating matrix (**R**) constructed by $Kr \times Kr$ spatial sub-matrix (**R**$_s$) containing the correlations between the $Kr$ spatial beamformers ($\check{a}_{k,i}^H$), and $Kr \times Kr$ temporal sub-matrix (**R**$_t^{(i)}$) containing the correlations between the temporal re-estimated parameters ($s_{k,1}$, ..., $s_{k,r}$), and for inverting said correlating matrix (**R**).

# CHANNEL MODEL  (COST 259)

## Multipath Fading Channel

**Array (BTS)**

$r_{c,i}$

$r_{c,i}$

**MS**

Secondary cluster

Main cluster

$$\mathbf{h}(t) = \sum_{c=1}^{N_c} \sum_{i=1}^{N_r(c)} \alpha_{c,i} \mathbf{a}(\vartheta_{c,i}) g(t - \tau_{c,i})$$

Transmission pulse + reception
(raised cosine, roll-off 22% @ $T_C$)

**Fig.1**

## Statistical model:

- $\alpha_{c,i} \sim \mathcal{CN}(m_\alpha, \sigma_\alpha^2)$
  with $m_\alpha = 0$ (Rayleight fading)

- $N_r, N_c \sim$ Poisson;
- $\tau_{c,i} \sim$ exp;
- power $P(\theta) \rightarrow$ Laplace

$P(\theta)$

$\vartheta$

$P(\tau) \rightarrow$ exp

$P(\tau)$

Main Cluster

Secondary Cluster

$S_{\tau,1}$   $S_{\tau,2}$

$\tau$

EP 1 255 387 A1

# Hybrid TD-CDMA - Uplink transmission burst

**Fig.2**

# Channel estimate: model for single *(m-th)* antenna

Training sequences ➤ $t$   ($K$ users, *index k*)   $\mathbf{x}^{(k)} = \left\{ x_n^{(k)} \right\}_{n=1}^{Nmid}$

($M$ antennas, *index m*)

Training sequence *k-th* user

user 1  $x_n^{(1)}$ → $\mathbf{h}^{(1,m)}$

user 2  $x_n^{(k)}$ → $\mathbf{h}^{(k,m)}$

$n_n^{(m)}$

$y_n^{(m)}$

user K  $x_n^{(K)}$ → $\mathbf{h}^{(K,m)}$

$\overset{W}{\longleftrightarrow}$

$X = \quad (KW \times Nmid)$

$X^{(1)}$
$X^{(2)}$  KW
$X^{(K)}$

$Nmid$ (midamble length, *index n*)

## Fig.3

## Single antenna *(m-th)* received signal

$$\mathbf{y}^{(m)^T} = \underbrace{\left[ \mathbf{h}^{(1,m)^T} \quad \cdots \quad \mathbf{h}^{(k,m)^T} \right]^T}_{\mathbf{h}^{(m)}} \underbrace{\begin{bmatrix} X^{(1)} \\ \vdots \\ X^{(K)} \end{bmatrix}}_{X} + \mathbf{n}^{(m)^T}$$

$(1 \times Nmid)$

➡ $$\mathbf{y}^{(m)^T} = \mathbf{h}^{(m)^T} X + \mathbf{n}^{(m)}$$

$\mathbf{h}^{(m)}$ : Multi-user time channel

$X$ : midamble (convolutional matrix)

$\mathbf{n}^{(m)}$ : noise (approx. Gaussian) temporally uncorrelated

$$\mathbf{h}^{(m)} = \left[ \; \mathbf{h}^{(1,m)} \; \middle| \; \mathbf{h}^{(2,m)} \; \middle| \; \cdots \; \middle| \; \mathbf{h}^{(K,m)} \; \right]$$

$(1 \times KW)$   $\overset{W}{\longleftrightarrow}$ (max. channel time dispertion)

EP 1 255 387 A1

# Channel estimate: model for $M$ antennas

Signal received on the antenna array :

$$\left[\mathbf{y}^{(1)}.....\,\mathbf{y}^{(M)}\right]^{T} = \left[\mathbf{h}^{(1)}.....\,\mathbf{h}^{(M)}\right]^{T}\begin{bmatrix}\mathbf{X}^{(1)}\\\vdots\\\mathbf{X}^{(K)}\end{bmatrix} + \left[\mathbf{n}^{(1)}.....\,\mathbf{n}^{(M)}\right]^{T} \quad\Rightarrow\quad \mathbf{Y} = \mathbf{HX} + \mathbf{N}$$

$$\underbrace{\qquad}_{\substack{\mathbf{Y}\\(M\times Nmid)}} \quad \underbrace{\qquad}_{\substack{\mathbf{H}\\(M\times KW)}} \quad \underbrace{\qquad}_{\substack{\mathbf{X}\\(KW\times Nmid)}} \quad \underbrace{\qquad}_{\substack{\mathbf{N}\\(M\times Nmid)}}$$

Estimating parameters:

Multi-user space-time channel

$$\mathbf{H} = \boxed{\begin{array}{c|c|c|c}\mathbf{H}^{(1)} & \mathbf{H}^{(2)} & ..... & \mathbf{H}^{(K)}\end{array}}\ \updownarrow K_a$$

Spatial noise covariance

$$\mathbf{R}_{n} = \frac{1}{Nmid}E\!\left[\mathbf{NN}^{H}\right]$$

**Fig.4**

EP 1 255 387 A1

# Maximum parsimony principle

## Trade-off between under-parameterization distortion and variance of the estimate

$$\left\|H - \hat{H}\right\|^2 \Big/ \left\|H\right\|^2$$

Variance of
the estimate

Under-parameterization
distortion

Under-parameterization

Optimum
parameterization

Over-parameterization

n. parameters

**Fig.5**

EP 1 255 387 A1

**BASE STATION RECEIVER**

Fig.6

# Channel estimator

$[A_k{}'B_k{}'^H]$

20 RECOLOURING

21 Memory

$C_k$

$\hat{R}_n^{H/2}[\ .\ ](X_kX_k^H)^{-H/2}$

$A_kB_k^H$

$A_kB_k^H$

Variable dimensional re-extimated channel

Spatial recolouring    Temporal recolouring

$Y \rightarrow$ $\check{R}_n^{-H/2}$

$\check{R}_n^{-H/2}$

22  $X_k\uparrow$    $\check{R}_n$ re-estimator

VAR-DIM    M

selector

S1 → t1

S2 --- t2

S3 --- t3

Sr --- tr

19    18

$A_k{}'B_k{}'^H$

REDCOMP
(Reduction complexity processor)

error

17

$X\downarrow Y$ 13    $X\downarrow Y$ Spatial covariance matrix estimator    Temporal whitening    Spatial whitening

$\hat{H}=[\hat{H}_1,...,\hat{H}_k]$    $\hat{R}_n$    $X_K\rightarrow$ $\hat{H}_k(X_kX_k^H)^{H/2}$ → $\hat{R}_n^{-H/2}[.]$

$\hat{H}_k{}'$

LS-ST channel estimator    14    15    16

Fig.7

# Data Receiver

**Fig.8**

## DECORRELATOR

Fig. 9

EP 1 255 387 A1

## Performance of the low-dimensional channel estimation with GTU channel and spatially uncorrelated noise

**Fig.10**

EP 1 255 387 A1

Performance of the low-dimensional channel estimation with GTU channel and spatially correlated noise

Fig.11

EP 1 255 387 A1

**Performance of the Base Station receiver with low and full-dimensional estimates: GTU channel, K = 8, spatially uncorrelated noise**

Fig.12

EP 1 255 387 A1

Performance of the Base Station receiver with low and full-dimensional estimates: GTU channel, K = 8, spatially correlated noise

Fig.13

EP 1 255 387 A1

**Performance of the mono-dimensional receiver for 3 inter-cell interferents: GTU channel with single cluster,**

Fig.14

**European Patent Office**

## PARTIAL EUROPEAN SEARCH REPORT

which under Rule 45 of the European Patent Convention shall be considered, for the purposes of subsequent proceedings, as the European search report

Application Number

EP 01 83 0291

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| | No relevant documents disclosed | | H04L25/02 |

**TECHNICAL FIELDS SEARCHED (Int.Cl.7)**

H04L

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 17 October 2001 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH
SHEET C**

Application Number

EP 01 83 0291

Claim(s) not searched:
1-18

Reason for the limitation of the search:

A meaningful search is not possible (Rule 45 EPC). The language of the claims is so obscure, and the claims contain so many linguistic errors, that it is impossible to determine the subject matter for which protection is sought. Furthermore, it is not possible, for the same reasons, to determin, on the basis of the description, the nature of the purported invention.